# EUROPÄISCHE PATENTSCHRIFT

(11) **EP 1 913 651 B1**
(45) Veröffentlichungstag und Bekanntmachung des Hinweises auf die Patenterteilung: **19.11.2008**
(21) Anmeldenummer: 06778181.5
(22) Anmeldetag: 07.08.2006
(51) Int. Cl.: H01M 4/68, C25D 5/10, H01M 4/73

(54) **ELEKTRODENGITTER**
ELECTRODE GRID
GRILLE D'ELECTRODES

(30) Priorität: 10.08.2005 DE 102005038064
(43) Veröffentlichungstag der Anmeldung: 23.04.2008
(73) Patentinhaber: Exide Technologies GmbH, 63654 Büdingen (DE); DSL Dresden Material-Innovation, 01069 Dresden (DE)
(72) Erfinder: KRAMM, Friedrich, 63654 Büdingen (DE); NIEPRASCHK, Harald, 63654 Büdingen (DE); WARLIMONT, Hans, 63579 Freigericht (DE); HOFMANN, Thomas, 09600 Niederschöna (DE)
(74) Vertreter: Seiffert, Klaus
(86) Internationale Anmeldenummer: PCT/EP2006/065115
(87) Internationale Veröffentlichungsnummer: WO 2007/017493

(56) Entgegenhaltungen:
- WO-A-94/19837
- WO-A-20/06053539
- DE-A1- 19 942 849
- DE-A1-2102004 006 56

## Beschreibung

Die Erfindung betrifft Elektrodengitter, die als Batterieelektroden für Bleibatterien verwendet werden.

Bekannte Elektrodengitter für Bleibatterien werden aus Feinblei oder Bleilegierungen, wie beispielsweise Blei-Zinn-Legierungen oder Blei-Calcium-Zinn-Legierungen, hergestellt. Die Herstellung erfolgt überwiegend im Kokillen- oder Bandguß aus schmelzflüssigen Bleilegierungen oder im Streckmetall- bzw. Stanzverfahren aus Bleiblechen. Mit diesen Verfahren ist es nicht möglich, in äußeren Schichten des Elektrodengitters gezielt eine andere Legierungskonzentration und ein anderes Korngefüge als im Inneren einzustellen, um damit Einfluß auf das Korrosionsverhalten zu nehmen. Diese Verfahren sind auch nicht dazu geeignet, eine äußere Schicht zu erzeugen, die infolge ihrer chemischen Zusammensetzung und Gefügeausbildung die Bildung einer Reaktionsschicht ermöglicht, die durch ihr Korrosionsverhalten einerseits eine gut haftende Verbindung zur aktiven Masse der Batterie begünstigt und damit die Neigung zu vorzeitigem Versagen der Batterie durch Ablösen der aktiven Masse vom Elektrodengitter verringert und andererseits die Korrosion so weit herabsetzt, daß eine ausreichende Lebensdauer des Elektrodengitters erzielt wird.

Ein weiterer Nachteil dieser Verfahren besteht darin, daß es nicht möglich ist, eine Oberflächenrauhigkeit definierter Größe gezielt zu erzeugen, um zusätzlich eine gut haftende mechanische Verbindung zur aktiven Masse kontrolliert herzustellen.

Ein weiterer Nachteil der bekannten Elektrodengitter, die nach den vorgenannten Verfahren hergestellt sind, besteht darin, daß sie unzureichende mechanische Stabilität besitzen können.

Die Aufgabe der vorliegenden Erfindung bestand darin, ein Elektrodengitter bereitzustellen mit verbesserter Korrosionsbeständigkeit, insbesondere bei Verwendung als die positive Batterieelektrode, verbesserter mechanischer Stabilität, verbesserter Zyklenstabilität und verbesserter Tiefentladefestigkeit.

Gelöst wird diese Aufgabe durch ein Elektrodengitter für eine Bleibatterie bestehend aus einem Gittersubstrat (1) und einer zusammenhängenden, galvanisch abgeschiedenen, mehrlagigen Beschichtung des Gittersubstrats, wobei das Gittersubstrat aus Blei oder Bleilegierung hergestellt ist und die mehrlagige Beschichtung wenigstens zwei hinsichtlich ihrer Zusammensetzung verschiedene Schichten aufweist, von denen eine Schicht (A) durch galvanische Abscheidung von reinem Blei hergestellt ist und eine weitere Schicht (B), die ausgehend von dem Gittersubstrat über der Schicht (A) angeordnet ist, durch galvanische Abscheidung von Blei mit wenigstens 0,5 Gew.-% und höchstens 2,0 Gew.-% Zinn hergestellt ist.

Die galvanische Abscheidung von Metallschichten auf dem Gittersubstrat hat eine Reihe von Vorteilen gegenüber anderen bekannten Beschichtungsverfahren. Die galvanische Abscheidung von metallischen Schichten eignet sich für die wirtschaftliche Massenproduktion von Gitterelektroden zu vergleichsweise geringen Kosten und mit hohem Durchsatz. Für die galvanische Beschichtung eignet sich beispielsweise ein Verfahren, bei dem ein Bleigitterband kontinuierlich durch ein galvanisches Bad oder mehrere nacheinander angeordnete galvanische Bäder geführt und die in den Bädern enthaltenen Metalle elektrochemisch auf dem Substrat niedergeschlagen werden. Ein solches Verfahren ist beispielsweise in der WO 02/057515 A2. offenbart. Für die Abscheidung der Metalle wird das Bleigitterband als Kathode durch die galvanischen Bäder geführt. Die Schaltung des Bleigitterbandes als Anode eignet sich beispielsweise zum Modifizieren der Metalloberfläche, wie beispielsweise zum Anlösen von Oberflächenbereichen (Aufrauhen) oder zum Entfetten.

Ein weiterer Vorteil der galvanischen Abscheidung der Metallschichten auf dem Gittersubstrat besteht darin, daß die gesamte Oberfläche des Gittersubstrats vollständig durchgehend beschichtet werden kann, was bei Plattierungsverfahren, wie sie beispielsweise in der US 4,906,540 beschrieben sind, nicht gewährleistet ist. Darüber hinaus hat die galvanische Abscheidung der Metallschichten auf dem Gittersubstrat den weiteren Vorteil, daß die galvanische Abscheidung eine sehr homogene Beschichtung liefert, die nicht porös ist. Bei der galvanischen Abscheidung wird eine Vielzahl fein verteilter Komgrenzen gebildet, so daß korrodierender Angriff als Schalenkorrosion und nicht vorwiegend als Korrosion entlang weniger Komgrenzen in die Tiefe des Gitters stattfindet, wie bei Gittern, die im Kokillenguß hergestellt werden. Bei der Schalen korrosion findet der korrodierende Angriff gleichmäßig verteilt über die gesamte Oberfläche von außen nach innen statt. Die Korngrenzenkorrosion führt dazu, daß einzelne große Körner aus der Metalloberfläche herausgelöst werden und die Korrosion an örtlich begrenzten Stellen sehr schnell in die Tiefe geht. Schalenkorrosion schreitet daher erheblich langsamer und gleichmäßiger voran als Komgrenzenkorrosion.

Ein weiterer Vorteil der galvanischen Abscheidung der erfindungsgemäßen Schichten besteht darin, daß sie auf einfache Weise ermöglicht, auf der Oberfläche der äußersten Schicht (B) gezielt eine Oberflächenrauhigkeit zu schaffen. Die Oberflächenrauhigkeit ist vorteilhaft, da sie die Haftung der aktiven Masse an dem Elektrodengitter verbessert. Der durch den galvanischen Prozeß erzeugte besondere Gefügezustand und die Oberflächenrauhigkeit auf der äußersten Schicht (B) begünstigen sowohl bei der Formierung der Platten als auch im Betrieb des Elektrodengitters die Bildung einer dünnen Korrosionsschicht an der äußersten Oberfläche, welche für einen guten elektronischen Übergang zwischen dem Elektrodengitter und der aktiven Masse sorgt.

Die erfindungsgemäße Schicht (A), die durch galvanische Abscheidung von reinem Blei hergestellt ist, stellt aufgrund ihrer sehr hohen Korrosionsbeständigkeit eine Korrosionsbarriere zum Gittersubstrat dar.

Die erfindungsgemäß vorgesehene Schicht (B), die ausgehend von dem Gittersubstrat über der Schicht (A) angeordnet und durch galvanische Abscheidung von Blei mit wenigstens 0,5 Gew.-% und höchstens 2,0 Gew.-% Zinn hergestellt ist, wird unabhängig von der Anzahl der Schichten vorzugsweise stets als die von dem Gittersubstrat ausgehend äußerste Schicht aufgebracht. Der hohe Zinngehalt dieser Schicht fördert die Bildung einer dünnen zinnreichen Korrosionsschicht an der äußersten Oberfläche und damit den Elektronenübergang zur Aktivmasse, die unmittelbar darauf aufgebracht wird. Des weiteren kann die Schicht (B) durch Schaffung einer Oberflächenrauhigkeit die mechanische Haftung der Aktivmasse verbessern.

In einer bevorzugten Ausführungsform der Erfindung weist die mehrlagige Beschichtung weiterhin eine oder mehrere Schichten (C) auf, die durch galvanische Abscheidung von Kupfer hergestellt ist/sind. Besonders bevorzugt weist die mehrlagige Beschichtung genau eine solche Schicht (C) aus Kupfer auf.

Das Vorsehen einer oder mehrerer Kupferschichten in der mehrlagigen Beschichtung erhöht die elektrische Leitfähigkeit des gesamten Gitters als Stromableiter. Die Kupferschicht (C) verbessert auch die mechanische Stabilität des erfindungsgemäßen Elektrodengitters. Eine Kupferschicht (C) kann mit Vorteil unmittelbar als erste Schicht galvanisch auf dem Gittersubstrat abgeschieden sein. Alternativ oder zusätzlich kann eine oder können mehrere Kupferschichten (C) zwischen den Bleischichten vorgesehen sein. Besonders bevorzugt umfaßt die erfindungsgemäße mehrlagige Beschichtung nur eine Kupferschicht (C).

In einer weiteren bevorzugten Ausführungsform des erfindungsgemäßen Elektrodengitters weist die mehrlagige Beschichtung weiterhin eine Schicht (D) auf, die durch galvanische Abscheidung von reinem Blei oder Blei mit höchstens 1,0 Gew.-% Zinn hergestellt ist. Vorzugsweise beträgt der Zinngehalt dieser Schicht (D) wenigstens 0,1 Gew.-% und höchstens 0,9 Gew.-%, besonders bevorzugt wenigstens 0,3 Gew.-% und höchstens 0,7 Gew.-% Zinn. Diese Schicht (D) mit gegenüber der äußersten Schicht (B) niedrigerem Zinngehalt fördert den Korrosionsschutz der mehrlagigen Beschichtung des erfindungsgemäßen Elektrodengitters.

In einer weiteren bevorzugten Ausführungsform des erfindungsgemäßen Elektrodengitters weist die mehrlagige Beschichtung weiterhin eine Schicht (E) auf, die durch galvanische Abscheidung von Blei mit wenigstens 0,1 Gew.-% und höchstens 1,0 Gew.-% Silber und gegebenenfalls mit zusätzlich wenigstens 0,1 Gew.-% und höchstens 1,0 Gew.-% Zinn hergestellt ist. Bevorzugt weist die silberhaltige Schicht (E) nicht mehr als 0,6 Gew.-% Silber und ganz besonders bevorzugt nicht mehr als 0,3 Gew.-% Silber auf. Die silberhaltige Schicht (E) fördert den Korrosionsschutz und erhöht die mechanische Stabilität des Elektrodengitters.

Vorteilhafte mehrlagige Beschichtungen des erfindungsgemäßen Elektrodengitters weisen ausgehend von dem Gittersubsträt eine der folgenden Schichtfolgen auf:
(A)-(B), (C)-(A)-(B), (A)-(E)-(B), (A)-(D)-(B), (D)-(A)-(B), (E)-(A)-(B), (A)-(C)-(D)-(B), (A)-(E)-(D)-(B), (A)-(C)-(D)-(B), (D)-(A)-(E)-(B), (D)-(C)-(A)-(B), (E)-(A)-(D)-(B), (C)-(D)-(A)-(B), (E)-(C)-(A)-(B), (C)-(A)-(E)-(B), (E)-(D)-(A)-(B), (D)-(E)-(A)-(B).

Erfindungsgemäß ist die Blei-Zinn-Schicht (B) mit hohem Zinngehalt stets die äußerste Schicht der mehrlagigen Beschichtung. Für den oben genannten Zweck dieser Schicht ist es vorteilhaft, wenn der Zinngehalt in dieser Schicht wenigstens 0,5 Gew.-% und höchstens 2,0 Gew.%, vorzugsweise wenigstens 0,8 Gew.-% und höchstens 1,5 Gew.-% beträgt.

Die mehrlagige Beschichtung des erfindungsgemäßen Elektrodengitters weist wenigstens 2 hinsichtlich ihrer Zusammensetzung verschiedene Schichten auf. Vorteilhaft sind 2, 3 oder 4 Schichten. Die mehrlagige Beschichtung sollte nicht mehr als 6, bevorzugt höchstens 5, ganz besonders bevorzugt höchstens 4 hinsichtlich ihrer Zusammensetzung verschiedene Schichten aufweisen. Bereits mehr als 4 Schichten sind prozeßtechnisch sehr aufwendig herzustellen. Die Herstellung einer zu hohen Anzahl an Schichten ist daher kosten- und zeitintensiv und wirtschaftlich nicht sinnvoll.

In einer weiteren bevorzugten Ausführungsform des erfindungsgemäßen Elektrodengitters weist die mehrlagige Beschichtung eine Gesamtdicke im Bereich von 100 bis 1000 µm, vorzugsweise von 120 bis 750 µm, besonders bevorzugt von 150 bis 500 µm auf. Bei dieser Schichtdicke ist ein ausreichender Korrosionsschutz und eine lange Haltbarkeit des Elektrodengitters für eine hohe Lebensdauer der Bleibatterie gewährleistet. Des weiteren verleiht die Schichtdicke im vorgenannten Bereich dem Gittersubstrat eine hohe mechanische Stabilität. Geringere Gesamtdicken der mehrlagigen Beschichtung verringern die Korrosionsbeständigkeit und damit die Lebensdauer sowie die mechanische Stabilität des Elektrodengitters. Höhere Gesamtdicken der mehrlagigen Beschichtung bringen keinen weiteren Vorteil bezüglich Korrosionsschutz in Anbetracht der üblichen Lebensdauer einer Bleibatterie und sind in ihrer Herstellung kosten- und zeitintensiv und damit unwirtschaftlich.

Die einzelnen hinsichtlich ihrer Zusammensetzung verschiedenen Schichten der mehrlagigen Beschichtung weisen vorteilhafterweise jeweils eine Dicke im Bereich von 30 bis 500 µm, vorzugsweise von 40 bis 400 µm, besonders bevorzugt von 50 bis 300 µm auf. Diese Einzelschichtdicken reichen aus, damit die jeweiligen Schichten die ihnen zugeschriebenen Funktionen und Eigenschaften erfüllen können, wie sie oben beschrieben sind. Zu geringe Schichtdicken können dazu führen, daß die einzelnen Schichten ihre Funktionen nicht in ausreichendem Maße erfüllen können, wie beispielsweise Korrosionsschutz, mechanische Stabilität usw. Höhere Einzelschichtdicken sind für die Erfüllung der jeweiligen Funktionen der Schichten nicht erforderlich und hinsichtlich ihrer Herstellung unwirtschaftlich.

Das Gittersubstrat des erfindungsgemäßen Elektrodengitters ist vorteilhafterweise aus Feinblei, einer Blei-Zinn-Legierung, einer Blei-Zinn-Silber-Legierung, einer Blei-Calcium-Zinn-Legierung oder einer Blei-Antimon-Legierung hergestellt. Üblicherweise hat das Gittersubstrat senkrecht zur Gitterebene eine Dicke von 0,3 bis 8 mm, vorzugsweise von 0,4 bis 5 mm, besonders bevorzugt von 0,5 bis 3 mm.

Das Gittersubstrat des erfindungsgemäßen Elektrodengitters kann auf verschiedene Weisen hergestellt sein. In einer Ausführungsform ist das Gittersubstrat als kontinuierliches Gitterband aus gegossenem oder gewalztem Bleiwerkstoffband unter Ausstanzen der Gitterstruktur hergestellt. In einer alternativen Ausführungsform ist das Gittersubstrat als kontinuierliches Gitterband nach dem Trommelgußverfahren oder dem Gießwalzverfahren hergestellt. In einer weiteren alternativen Ausführungsform ist das Gitterband als kontinuierliches Gitterband aus gegossenem oder gewalztem Bleiwerkstoffband unter Stanzen und anschließendem Verstrecken nach dem Streckmetallverfahren hergestellt. Diese Verfahren haben den Vorteil, daß sie ein kontinuierliches Gitterband liefern, das in einem kontinuierlichen Galvanisierungsverfahren mit mehreren nacheinander angeordneten Galvanikbädern sehr wirtschaftlich und zeitsparend beschichtet werden können.

Ein Vorteil des erfindungsgemäßen Elektrodengitters besteht darin, daß es unter Verwendung eines im Concast- oder Streckmetallverfahren hergestellten Gitterbandes als Substrat kontinuierlich und kostengünstig hergestellt werden kann. Die Nachteile der herkömmlichen Substrate alleine sind je nach Legierung geringe mechanische Stabilität, schlechte elektrische Leitfähigkeit und je nach Herstellverfahren und Legierung geringe Korrosionsstabilität und schlechte mechanische Haftung der aktiven Masse. Diese Nachteile können durch die erfindungsgemäße mehrlagige, galvanisch hergestellte Beschichtung überwunden werden.

Ein weiterer Vorteil des erfindungsgemäßen Elektrodengitters besteht darin, daß Batterien, die mit dem erfindungsgemäßen Eletrodengitter hergestellt sind, eine hohe Zyklenstabilität erreichen. Zyklenstabilität bedeutet, daß die Batterie sehr häufigen Lade- und Entladevorgängen standhalten, wie sie z. B. in Rollstühlen, Kehrmaschinen and elektrisch angetriebenen Staplern stattfinden. Tests der Zyklenstabilität von Batterien sind in der Norm IEC 60254, Teil 1 beschrieben.

Noch ein weiterer Vorteil des erfindungsgemäßen Elektrodengitters besteht darin, daß Batterien, die mit dem erfindungsgemäßen Elektrodengitter hergestellt sind, eine hohe Tiefentladefestigkeit erreichen. Tiefentladefestigkeit bedeutet, daß die Batterie Entladungen unter die vorgeschriebene Entladeschlußspannung standhält, wie dies z.B. im Fahrbetrieb bei Rollstühlen, Notstromversorgungen und elektrisch betriebenen Gabelstaplern vorkommen kann, wenn dies nicht durch elektrische Abschaltung verhindert wird. Diese Entladungen bedeuten grundsätzlich eine Schädigung der Bleielektrode, insbesondere der positiven. Tests der Tiefentladefestigkeit von Batterien sind in der in IEC 61056, Teil 1 beschrieben.

Noch ein weiterer Vorteil des erfindungsgemäßen Elektrodengitters besteht darin, daß gute Korrosionsbeständigkeit, hohe mechanische Stabilität, gute elektrische Leitfähigkeit und einen guten elektrischen Übergang vom Gitter zur aktiven Masse aufweist. Des weiteren zeichnet sich das erfindungsgemäße Elektrodengitter durch eine gute mechanische Haftung der aktiven Masse aufgrund einer gezielten Rauhigkeit der Oberfläche aus.

Durch Auswahl der Art und Abfolge der Schichten in der mehrlagigen Beschichtung des erfindungsgemäßen Elektrodengitters können daher optimale Eigenschaften eines Gitters erreicht werden.

Das erfindungsgemäße Elektrodengitter eignet sich ganz besonders als Gitter der positiven Elektrode (aber auch der negativen Elektrode), da die positive Elektrode besonders hohen Belastungen, insbesondere in Bezug auf Korrosion, ausgesetzt ist. Korrosion des positiven Gitters tritt besonders bei Überladung der Batterie sowohl bei zyklischer Anwendung aufgrund der Lademethode als auch bei stationärem Betrieb durch permanente Dauerladung der Batterie, insbesondere bei hohen Temperaturen, auf.

Das erfindungsgemäße Elektrodengitter eignet sich für verschlossene Batterien sowie für Bleibatterien mit flüssigem, gelartigem oder im Vlies gebundenem Elektrolyten für zyklische, stationäre und Starteranwendungen.

Weitere Vorteile, Merkmale und Ausführungsformen werden anhand der nachfolgenden Beschreibung der anhängenden Figuren deutlich.
- Figur 1: zeigt schematisch einen Schnitt durch ein nach dem Trommelgußverfahren hergestelltes erfindungsgemäßes Elektrodengitter mit 2 galvanisch abgeschiedenen Schichten A und B.
- Figur 2: zeigt schematisch einen Schnitt durch ein nach dem Streckmetallverfahren hergestelltes erfindungsgemäßes Elektrodengitter mit 4 galvanisch abgeschiedenen Schichten mit unterschiedlichen, erfindungsgemäß geeigneten Schichtabfolgen.

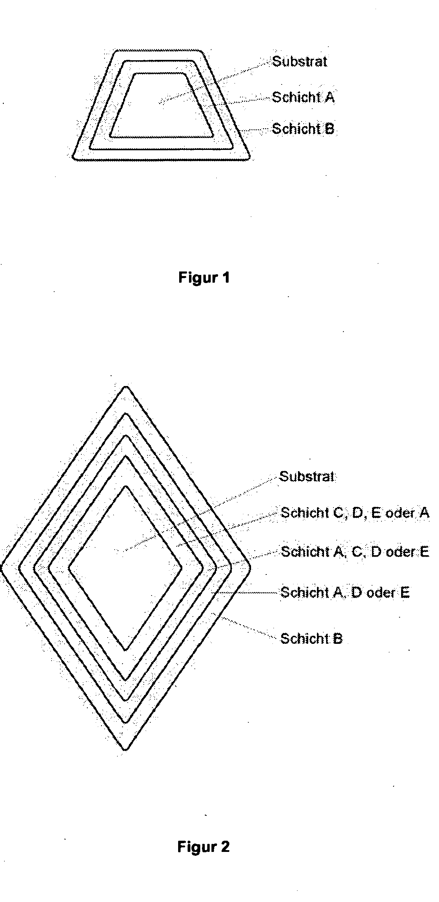

In Figur 1 ist schematisch ein Schnitt durch ein nach dem Trommelgußverfahren hergestelltes erfindungsgemäßes Elektrodengitter dargestellt. Das Substrat besteht in dieser beispielhaften Ausführungsform aus einer Blei-Kalzium-Zinn-Legierung mit 0,1 Gew.-% Kalzium, 0,2 Gew.-% Zinn und als Rest Blei. Auf dem Substrat sind 2 Schichten (A) und (B) galvanisch abgeschieden. Die Schicht (A) besteht in dieser beispielhaften Ausführungsform aus reinem Blei (Feinblei) und die Schicht (B) aus Blei mit 1,5 Gew.-% Zinn. Die zweilagige Beschichtung hat eine Gesamtdicke von 400 µm, wobei die Schicht (A) eine Dicke von 250 µm hat und die Schicht (B) eine Dicke von 150 µm hat.

In Figur 2 ist schematisch ein Schnitt durch ein nach dem Streckmetallverfahren hergestelltes erfindungsgemäßes Elektrodengitter dargestellt. Das Substrat besteht in dieser beispielhaften Ausführungsform aus einer Blei-Kalzium-Zinn-Legierung mit 0,06 Gew.-% Kalzium, 0,1 Gew.-% Zinn und als Rest Blei. Auf dem Substrat sind 4 Schichten galvanisch abgeschieden, wobei die erste Schicht auf dem Substrat eine Schicht (C), (D), (E) oder (A) sein kann, die zweite Schicht eine Schicht (A), (C), (D) oder (E) sein kann, die dritte Schicht eine Schicht (A), (D) oder (E) sein kann und die vierte Schicht eine Schicht (B) ist. In der vierlagigen Beschichtung haben die Schichten (A), (B), (D) und (E) jeweils Dicken von etwa 150 µm und die Schicht (C) eine Dicke von etwa 50 µm.

## Patentansprüche

1. Elektrodengitter für eine Bleibatterie, bestehend aus einem Gittersubstrat (1) und einer zusammenhängenden, galvanisch abgeschiedenen, mehrlagigen Beschichtung (2) des Gittersubstrates (1), wobei
das Gittersubstrat aus Blei oder Bleilegierung hergestellt ist und
die mehrlagige Beschichtung wenigstens 2 hinsichtlich ihrer Zusammensetzung verschiedene Schichten aufweist, von denen
eine Schicht (A) durch galvanische Abscheidung von reinem Blei hergestellt ist und
eine Schicht (B), die ausgehend von dem Gittersubstrat über der Schicht (A) angeordnet ist, durch galvanische Abscheidung von Blei mit wenigstens 0,5 Gew.% und höchstens 2,0 Gew.-% Zinn hergestellt ist.

2. Elektrodengitter nach Anspruch 1, **dadurch gekennzeichnet, daß** die Schicht (B) unabhängig von der Anzahl der Schichten stets die von dem Gittersubstrat ausgehend äußerste Schicht darstellt.

3. Elektrodengitter nach einem der vorangegangenen Ansprüche, **dadurch gekennzeichnet, daß** die mehrlagige Beschichtung weiterhin eine oder mehrere Schichten (C), vorzugsweise genau eine Schicht (C) aufweist, die durch galvanische Abscheidung von Kupfer hergestellt ist/sind.

4. Elektrodengitter nach einem der vorangegangenen Ansprüche, **dadurch gekennzeichnet, daß** die mehrlagige Beschichtung weiterhin eine Schicht (D) aufweist, die durch galvanische Abscheidung von Blei mit höchstens 1,0 Gew.-% Zinn hergestellt ist.

5. Elektrodengitter nach einem der vorangegangenen Ansprüche, **dadurch gekennzeichnet, daß** die mehrlagige Beschichtung weiterhin eine Schicht (E) aufweist, die durch galvanische Abscheidung von Blei mit wenigstens 0,1 Gew.% und höchstens 1,0 Gew.-% Silber, vorzugsweise mit höchstens 0,6 Gew.-% Silber und ganz besonders bevorzugt mit höchstens 0,3 Gew.-% Silber und gegebenenfalls mit zusätzlich wenigstens 0,1 Gew.-% und höchstens 1,0 Gew.-% Zinn hergestellt ist.

6. Elektrodengitter nach einem der vorangegangenen Ansprüche, **dadurch gekennzeichnet, daß** die mehrlagige Beschichtung ausgehend von dem Gittersubstrat besonders bevorzugt eine der folgenden Schichtfolgen aufweist:
(A)-(B), (C)-(A)-(B), (A)-(E)-(B), (A)-(D)-(B), (D)-(A)-(B), (E)-(A)-(B), (A)-(C)-(D)-(B). (A)-(E)-(D)-(B), (A)-(C)-(D)-(B). (D)-(A)-(E)-(B), (D)-(C)-(A)-(B), (E)-(A)-(D)-(B), (C)-(D)-(A)-(B). (E)-(C)-(A)-(B). (C)-(A)-(E)-(B), (E)-(D)-(A)-(B), (D)-(E)-(A)-(B).

7. Elektrodengitter nach einem der vorangegangenen Ansprüche, **dadurch gekennzeichnet, daß** die Schicht (B) durch galvanische Abscheidung von Blei mit wenigstens 0,8 Gew.-% und höchstens 1,5 Gew.-% Zinn hergestellt ist.

8. Elektrodengitter nach einem der vorangegangenen Ansprüche, **dadurch gekennzeichnet, daß** die mehrlagige Beschichtung höchstens 6, bevorzugt höchstens 5, ganz besonders bevorzugt höchstens 4 hinsichtlich ihrer Zusammensetzung verschiedene Schichten aufweist.

9. Elektrodengitter nach einem der vorangegangenen Ansprüche, **dadurch gekennzeichnet, daß** die mehrlagige Beschichtung 2 oder 3 hinsichtlich ihrer Zusammensetzung verschiedene Schichten aufweist.

10. Elektrodengitter nach einem der vorangegangenen Ansprüche, **dadurch gekennzeichnet, daß** die mehrlagige Beschichtung eine Gesamtdicke im Bereich von 100 bis 1000 µm, vorzugsweise von 120 bis 750 µm, besonders bevorzugt von 150 bis 500 µm aufweist.

11. Elektrodengitter nach einem der vorangegangenen Ansprüche, **dadurch gekennzeichnet, daß** die hinsichtlich ihrer Zusammensetzung verschiedenen Schichten der mehrlagigen Beschichtung jeweils eine Dicke im Bereich von 30 bis 500 µm, vorzugsweise von 40 bis 400 µm, besonders bevorzugt von 50 bis 300 µm aufweisen.

12. Elektrodengitter nach einem der vorangegangenen Ansprüche, **dadurch gekennzeichnet, daß** die Schichten der mehrlagigen Beschichtung nicht porös sind.

13. Elektrodengitter nach einem der vorangegangenen Ansprüche, **dadurch gekennzeichnet, daß** das Gittersubstrat aus Feinblei, einer Blei-Zinn-Legierung, einer Blei-Zinn-Silber-Legierung, einer Blei-Kalzium-Zinn-Legierung oder einer Blei-Antimon-Legierung hergestellt ist.

14. Elektrodengitter nach einem der vorangegangenen Ansprüche, **dadurch gekennzeichnet, daß** das Gittersubstrat senkrecht zur Gitterebene eine Dicke von 0,3 bis 8 mm, vorzugsweise von 0,4 bis 5 mm, besonders bevorzugt von 0,5 bis 3 mm aufweist.

15. Elektrodengitter nach einem der vorangegangenen Ansprüche, **dadurch gekennzeichnet, daß** das Gittersubstrat als kontinuierliches Gitterband aus gegossenem oder gewalztem Bleiwerkstoffband unter Ausstanzen der Gitterstruktur hergestellt ist.

16. Elektrodengitter nach einem der vorangegangenen Ansprüche, **dadurch gekennzeichnet, daß** das Gittersubstrat als kontinuierliches Gitterband nach dem Trommelgußverfahren oder dem Gießwalzverfahren hergestellt ist.

17. Elektrodengitter nach einem der vorangegangenen Ansprüche, **dadurch gekennzeichnet, daß** das Gittersubstrat als kontinuierliches Gitterband aus gegossenem oder gewalztem Bleiwerkstoffband unter Stanzen und anschließendem Verstrecken nach dem Streckmetallverfahren hergestellt ist.

18. Bleibatterie oder Bleiakkumulator, **dadurch gekennzeichnet, daß** die positiven und/oder negativen Elektroden Elektrodengitter nach einem der vorangegangenen Ansprüche umfassen.

## Claims

1. An electrode grid for a lead accumulator, comprising a grid substrate (1) and a coherent, galvanically deposited, multi-layer coating (2) on the grid substrate (1), wherein
the grid substrate is produced from lead or lead alloy and
the multi-layer coating comprises at least two layers which differ in respect of their composition, of which
one layer (A) is produced by galvanic deposit of pure lead and
one layer (B) which starting from the grid substrate is arranged over the layer (A) is produced by galvanic deposit of lead with at least 0.5% by weight and at most 2.0% by weight of tin.

2. An electrode grid as set forth in claim 1 **characterised in that** the layer (B) always represents the outermost layer as considered from the grid substrate independently of the number of layers.

3. An electrode grid as set forth in one of the preceding claims **characterised in that** the multi-layer coating further has one or more layers (C), preferably precisely one layer (C), which is/are produced by galvanic deposit of copper.

4. An electrode grid as set forth in one of the preceding claims **characterised in that** the multi-layer coating further has a layer (D) which is produced by galvanic deposit of lead having at most 1.0% by weight of tin.

5. An electrode grid as set forth in one of the preceding claims **characterised in that** the multi-layer coating further has a layer (E) which is produced by galvanic deposit of lead having at least 0.1 % by weight and at most 1.0% by weight of silver, preferably with at most 0.6% by weight of silver and quite particularly preferably with at most 0.3% by weight of silver and optionally with additionally at least 0.1% by weight and at most 1.0% by weight of tin.

6. An electrode grid as set forth in one of the preceding claims **characterised in that** the multi-layer coating starting from the grid substrate particularly preferably has one of the following layer sequences: (A)-(B), (C)-(A)-(B), (A)-(E)-(B), (A)-(D)-(B), (D)-(A)-(B), (E)-(A)-(B), (A)-(C)-(D)-(B), (A)-(E)-(D)-(B), (A)-(C)-(D)-(B), (D)-(A)-(E)-(B), (D)-(C)-(A)-(B), (E)-(A)-D)-(B), (C)-(D)-(A)-(B), (E)-(C)-(A)-(B), (C)-(A)-(E)-(B), (E)-(D)-(A)-(B), (D)-(E)-(A)-(B).

7. An electrode grid as set forth in one of the preceding claims **characterised in that** the layer (B) is produced by galvanic deposit of lead having at least 0.8% by weight and at most 1.5% by weight of tin.

8. An electrode grid as set forth in one of the preceding claims **characterised in that** the multi-layer coating has at most 6, preferably at most 5, quite particularly preferably at most 4 layers which are different in respect of their composition.

9. An electrode grid as set forth in one of the preceding claims **characterised in that** the multi-layer coating has 2 or 3 layers which are different in respect of their composition.

10. An electrode grid as set forth in one of the preceding claims **characterised in that** the multi-layer coating is of an overall thickness in the range of between 100 and 1000 µm, preferably between 120 and 750 µm, particularly preferably between 150 and 500 µm.

11. An electrode grid as set forth in one of the preceding claims **characterised in that** the individual layers of the multi-layer coating, which differ in respect of their composition, are each of a thickness in the range of between 30 and 500 µm, preferably between 40 and 400 µm, particularly preferably between 50 and 300 µm.

12. An electrode grid as set forth in one of the preceding claims **characterised in that** the layers of the multi-layer coating are not porous.

13. An electrode grid as set forth in one of the preceding claims **characterised in that** the grid substrate is produced from fine lead, a lead-tin alloy, a lead-tin-silver alloy, a lead-calcium-tin alloy or a lead-antimony alloy.

14. An electrode grid as set forth in one of the preceding claims **characterised in that** the grid substrate perpendicularly to the plane of the grid is of a thickness of between 0.3 and 8 mm, preferably between 0.4 and 5 mm, particularly preferably between 0.5 and 3 mm.

15. An electrode grid as set forth in one of the preceding claims **characterised in that** the grid substrate is produced in the form of a continuous grid strip from cast or rolled lead material strip with the grid structure being stamped out.

16. An electrode grid as set forth in one of the preceding claims **characterised in that** the grid substrate is produced in the form of a continuous grid strip in accordance with the drum casting process or the casting rolling process.

17. An electrode grid as set forth in one of the preceding claims **characterised in that** the grid substrate is produced in the form of a continuous grid strip from cast or rolled lead material strip with stamping and subsequent stretching in accordance with the expanded metal process.

18. A lead accumulator or lead battery **characterised in that** the positive and/or negative electrodes include electrode grids as set forth in one of the preceding claims.

## Revendications

1. Grille d'électrodes pour une batterie au plomb, comprenant un substrat (1) de grille et un revêtement (2) multicouche, continu, déposé par voie galvanique, dudit substrat (1) de grille,
le substrat de grille étant réalisé en plomb ou en alliage de plomb et
le revêtement multicouche présente au moins deux couches de composition différente, dont une couche (A) est produite par dépôt par voie galvanique de plomb pur et
une couche (B) qui est disposée au-dessus de la couche (A) à partir du substrat de grille et est réalisée en dépôt par voie galvanique de plomb avec au moins 0,5 % en poids et au plus 2,0 % en poids de zinc.

2. Grille d'électrode selon la revendication 1, **caractérisée en ce que** la couche (B) forme toujours la couche extrême à partir du substrat de grille, indépendamment du nombre de couches.

3. Grille d'électrodes selon l'une quelconque des revendications précédentes, **caractérisée en ce que** le revêtement multicouche présente en outre une ou plusieurs couches (C), de préférence précisément une couche (C), qui est / sont réalisée(s) en dépôt par voie galvanique de cuivre.

4. Grille d'électrodes selon l'une quelconque des revendications précédentes, **caractérisée en ce que** le revêtement multicouche présente en outre une couche (D), qui est réalisée en dépôt par voie galvanique de plomb avec au plus 1,0 % en poids de zinc.

5. Grille d'électrodes selon l'une quelconque des revendications précédentes, **caractérisée en ce que** le revêtement multicouche présente en outre une couche (E), qui est réalisée en dépôt par voie galvanique de plomb avec au moins 0,1 % en poids et au plus 1,0 % en poids d'argent, de préférence avec au plus 0,6 % en poids d'argent et mieux encore avec au plus 0,3 % en poids d'argent et le cas échéant avec en plus au moins 0,1 % en poids et au plus 1,0 % en poids de zinc.

6. Grille d'électrodes selon l'une quelconque des revendications précédentes, **caractérisée en ce que** le revêtement multicouche présente à partir du substrat de grille de préférence une des suites de couches suivantes :
(A)_(B), (C)-(A)-(B), (A)-(E)-(B), (A)-(D)-(B), (D)-(A)-(B), (E)-(A)-(B), (A)-(C)-(D)-(B), (A)-(E)-(D)-(B), (A)-(C)-(D)-(B), (D)-(A)-(E)-(B), (D)-(C)-(A)-(B), (E)-(A)-(D)-(B), (C)-(D)-(A)-(B), (E)-(C)-(A)-(B), (C)-(A)-(E)-(B), (E)-(D)-(A)-(B), (D)-(E)-(A)-(B).

7. Grille d'électrodes selon l'une quelconque des revendications précédentes, **caractérisée en ce que** la couche (B) est réalisée en dépôt par voie galvanique de plomb avec au moins 0,8 % en poids et au plus 1,5 % en poids de zinc.

8. Grille d'électrodes selon l'une quelconque des revendications précédentes, **caractérisée en ce que** le revêtement multicouche présente au plus 6, de préférence au plus 5, et mieux encore au plus 4 couches de composition différente.

9. Grille d'électrodes selon l'une quelconque des revendications précédentes, **caractérisée en ce que** le revêtement multicouche présente 2 ou 3 couches de composition différente.

10. Grille d'électrodes selon l'une quelconque des revendications précédentes, **caractérisée en ce que** le revêtement multicouche présente une épaisseur totale dans une plage de 100 à 1000 µm, de préférence entre 120 et 750 µm, et mieux encore entre 150 et 500 µm.

11. Grille d'électrodes selon l'une quelconque des revendications précédentes, **caractérisée en ce que** les couches de composition différente du revêtement multicouche présentent chacune une épaisseur dans la plage de 30 à 500 µm, de préférence entre 40 et 400 µm, et mieux encore entre 50 et 300 µm.

12. Grille d'électrodes selon l'une quelconque des revendications précédentes, **caractérisée en ce que** les couches du revêtement multicouche ne sont pas poreuses.

13. Grille d'électrodes selon l'une quelconque des revendications précédentes, **caractérisée en ce que** le substrat de grille est réalisé en plomb affiné, en alliage de plomb / zinc, en alliage de plomb / zinc / argent, en alliage de plomb / calcium / zinc ou en alliage de plomb / antimoine.

14. Grille d'électrodes selon l'une quelconque des revendications précédentes, **caractérisée en ce que** le substrat de grille présente verticalement au plan de grille une épaisseur de 0,3 à 8 mm, de préférence entre 0,4 et 5 mm, et mieux encore entre 0,5 et 3 mm.

15. Grille d'électrodes selon l'une quelconque des revendications précédentes, **caractérisée en ce que** le substrat de grille est réalisé en tant que bande de grille continue à partir de bande de plomb coulée ou laminée par découpage de la structure de grille.

16. Grille d'électrodes selon l'une quelconque des revendications précédentes, **caractérisée en ce que** le substrat de grille est réalisé selon le procédé de poches de coulée tonneau ou selon le procédé de laminage de coulée continue.

17. Grille d'électrodes selon l'une quelconque des revendications précédentes, **caractérisée en ce que** le substrat de grille est réalisé en tant que bande de grille continue à partir de bande de plomb coulée ou laminée par découpage et étirage selon le procédé de métal étiré.

18. Batterie en plomb ou accumulateur en plomb, **caractérisé en ce que** les électrodes positives et / ou négatives comprennent une grille d'électrodes selon l'une quelconque des revendications précédentes.
